Europäisches Patentamt

European Patent Office

Office européen des brevets

(19)

(11) Veröffentlichungsnummer: **0 282 610 B1**

(12) **EUROPÄISCHE PATENTSCHRIFT**

(45) Veröffentlichungstag der Patentschrift:
06.06.90

(21) Anmeldenummer: 87103792.5

(22) Anmeldetag: 16.03.87

(51) Int. Cl.⁵: **B60K 17/344**

(54) Vorderachsgetriebe für Allradfahrzeuge.

(43) Veröffentlichungstag der Anmeldung:
21.09.88 Patentblatt 88/38

(45) Bekanntmachung des Hinweises auf die Patenterteilung:
06.06.90 Patentblatt 90/23

(84) Benannte Vertragsstaaten:
DE ES FR GB IT NL SE

(56) Entgegenhaltungen:
DE-A- 3 418 557
DE-B- 2 531 224
US-A- 2 154 045

A.T.Z. AUTOMOBILTECHNISCHE ZEITSCHRIFT,
Band 88, Nr. 6, Juni 1986, Seiten 345-350, Stuttgart, DE;
H. GAUS et al.: "ASD, ASR und 4MATIC: Drie Systeme
im 'Konzept Aktive Sicherheit' von Daimler-Benz -
Teil 2"
Idem

(73) Patentinhaber: **Dr.Ing.h.c. F. Porsche
Aktiengesellschaft, Porschestrasse 42,
D-7000 Stuttgart 40(DE)**

(72) Erfinder: **Höbel, Peter, Dipl.-Ing., Waldenser Strasse 15,
D-7131 Wiernsheim-Serres(DE)**
Erfinder: **Tschunko, Jan, Dipl.-Ing.,
Lindenbachstrasse 71, D-7000 Stuttgart 31(DE)**

## Beschreibung

Die Erfindung bezieht sich auf ein Vorderachsgetriebe für Allradfahrzeuge nach dem Oberbegriff des Anspruchs 1.

Aus der DE-AS 25 31 224 ist ein in einem Gehäuse angeordnetes Achsgetriebe mit einem Winkeltrieb und einem Differentialgetriebe bekannt geworden, das eine Antriebswelle umfaßt, die in einem angeflanschten weiteren Lagergehäuse gehalten wird. Ein Tellerrad des Getriebes ist in Lagern über einen gehäuseseitigen Flansch abgestützt und mit einem Ausgleichsgetriebegehäuse verbunden. Radantriebswellen sind jeweils mit einem Achswellenrad des Differentialgetriebes verbunden und zu einer Radnabe geführt.

Der Erfindung liegt die Aufgabe zugrunde, ein kompaktes Vorderachsgetriebe für Allradfahrzeuge mit einer durch die Gehäusegestaltung vereinfachten Montage des Getriebes bei kräftegünstiger Lageranordnung des Winkeltriebs zu schaffen, wobei gleichzeitig eine Trennung des Getriebeölraumes vom Motorölraum erreicht werden soll.

Diese Aufgabe wird erfindungsgemäß durch die kennzeichnenden Merkmale des Anspruchs 1 gelöst. Weitere vorteilhafte Merkmale beinhalten die Unteransprüche.

Durch die Erfindung wird ein Gehäuse für ein Vorderachsgetriebe geschaffen, in dem das Getriebe, wie der Winkeltrieb und das Differentialgetriebe in einfacher Weise durch entsprechende Gehäuseöffnungen in einem vormontierbaren Zustand einsetzbar sind.

Über einen hülsenförmig ausgebildeten und stirnseitig angeordnetem Deckel des Gehäuses, sowie durch die Anordnung des Tellerrades mit seinen von der Längsmittelachse abgewandten Zähnen, kann das Gelenk der Radantriebswelle relativ nah zur Längsmittelachse des Motors gelegt werden. Diese Anordnung des Tellerrades ergibt einen derartig großen Abstand zwischen der Längsmittelachse und der Antriebswelle, daß diese am Schwungrad vorbeiführbar ist und daß ein Radantriebsgelenk nur so weit nach außen - in bezug auf das Rad - zu legen ist, wie es vom Einbauraum des Differentials her notwendig ist, so daß sich bis zum Rad eine relativ lange Radantriebswelle ergibt, die einen geringeren Dauerbeugewinkel aufweisen kann.

Die Ausbildung des hülsenförmigen Lagerdeckels am Getriebegehäuse ermöglicht in einfacher Bauweise eine umschlossene Aufnahme eines Gelenklagers für die Radantriebswelle und die Lagerung des Tellerrades bzw. des Differentialgetriebes in einem Abstützlager, wobei dieses zur günstigen Krafteinleitung nahezu in der Ebene der Zähne des Tellerrades liegt.

Das Getriebegehäuse ist mit einem Motorgehäuse verbunden und weist eine Ölwanne mit einem vom Motorölraum über einen Steg abgetrennten Getriebeölraum auf. Ein Deckel schließt beide Ölräume trennend voneinander ab, so daß im Getriebe Hypoidöl verwendet werden kann. Die abzuschließende Öffnung des Getriebeölraumes ist so groß bemessen, daß das Getriebe in einem zusammengesetzten Zustand einfach montierbar wird.

Ein an das Getriebegehäuse in Fahrzeugquerrichtung anschließendes rohrförmiges Gehäuseteil in dem die Radantriebswelle über zwei Lager gehalten ist, wird vom Getriebeölraum her zur Schmierung insbesondere des ausgangsseitigen Lagers mit Öl versorgt. Hierdurch ist für dieses Lager nur eine Dichtung nach außen hin erforderlich und zusätzliche Teile, wie z.B. ein Schutzrohr und eine Befestigung können entfallen.

Ein Ausführungsbeispiel der Erfindung ist in der Zeichnung dargestellt und wird im folgenden näher beschrieben.

Es zeigen:

Fig. 1 eine Draufsicht auf ein Fahrzeug mit Allradantrieb in einer schematischen Darstellung,

Fig. 2 eine Ansicht in Richtung Z auf das Gehäuse mit Getriebe im Schnitt, und

Fig. 3 eine Draufsicht auf das Vorderachsgetriebe.

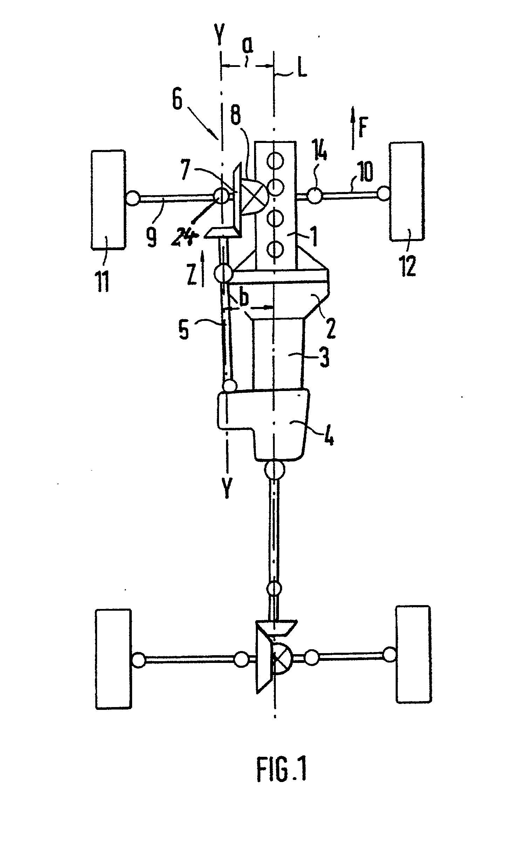

Wie Fig. 1 zeigt, weist ein Kraftfahrzeug mit Allradantrieb einen längseingebauten Motor 1, ein Schwungrad 2, ein Gangschaltgetriebe 3 und ein Verteilergetriebe 4 auf. Von diesem führt eine Antriebswelle 5 zu einem Vorderachsgetriebe 6, das einen Winkeltrieb 7 und ein Differentialgetriebe 8 umfaßt. Über Radantriebswellen 9 und 10 werden die Räder 11 und 12 angetrieben, die Gelenke 24 und 14 aufweisen.

Das Vorderachsgetriebe 6 ist in einem Gehäuse 15 angeordnet, das ein das Getriebe 6 aufnehmenden ersten Teil 15a und ein die eine Radantriebswelle 10 aufnehmenden zweiten rohrförmigen Teil 15b umfaßt und beide Teile 15a und 15b vorzugsweise aus einem Gußstück bestehen und mit einem Motorgehäuse verbunden sind.

Vorderseitig des Gehäuses 15 ist mit dem Gehäuseteil 15a ein hülsenförmiger Lagerdeckel 16 verbunden, der mit seinem freien Ende 17 in den Getrieberaum 18 ragt und mit seinem weiteren, dem freien Ende 17 abgekehrten vorderen Ende 19 über einen Flansch 20 am Gehäuse 15 befestigt ist. An dem freien Ende 17 ist ein Abstützlager 21 des Winkeltriebs 7 bzw. für das Getriebe 6 angeordnet, das etwa in einer gemeinsamen senkrechten Längsebene X-X mit den Zähnen 23 des Tellerrades 22 liegt. An dem abgekehrten anderen Ende 19 ist ein Gelenklager 24 für die eine Radantriebswelle 9 gehalten und vom Lagerdeckel 16 teilweise umschlossen.

Die Zähne 23 des Tellerrades 22 des Winkeltriebes 7 sind abgekehrt zur Längsmittelachse L des Fahrzeugs dem Rad 11 zugerichtet, so daß die Antriebswelle 5 im Abstand b dicht am Schwungrad 2 vorbeigeführt werden kann und das Radantriebsgelenk 24 mit einem relativ geringen Abstand a zur Längsmittelachse L angeordnet ist. Insbesondere liegt das Gelenk 24 in einer senkrechten Längsebene Y-Y mit der Antriebswelle 5.

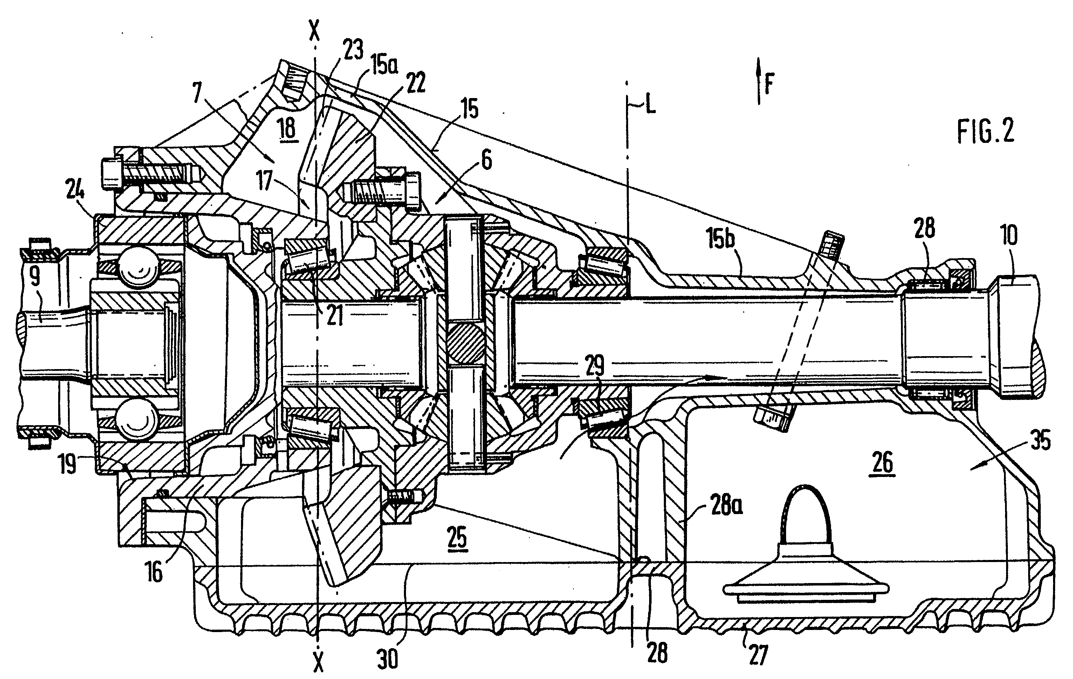

Das Gehäuse 15 bildet im unteren Bereich, wie Fig. 2 näher zeigt, eine Ölwanne 35 mit zwei Ölräumen 25 und 26, die über einen einteiligen Deckel 27 abgeschlossen sind. Der eine Ölraum 25 nimmt Getriebeöl auf und der weitere Ölraum ist für Motoröl vorgesehen. Der Getriebeölraum 25 ist mit dem rohrförmigen Gehäuseteil 15b derart verbunden, daß über das Lager 29 ein Öldurchtritt möglich ist. In dem Gehäuseteil 15b ist endseitig ein Lager 28 für die Welle 10 vorgesehen, daß somit nach dem Durchtritt von Getriebeöl durch das eingangsseitige Lager 29 ohne aufwendige Mittel geschmiert werden kann.

Der Deckel 27 weist eine erhabene Trennrippe 28 auf, die sich an einem gehäuseseitigen Steg 28a abstützt. Die abzuschließende Öffnung 30 des Getriebeölraumes 25 entspricht etwa dem lichten Umfang des Getriebes 6, so daß ein einfaches Ein- und Ausbauen in einem vormontierbaren Zustand möglich wird.

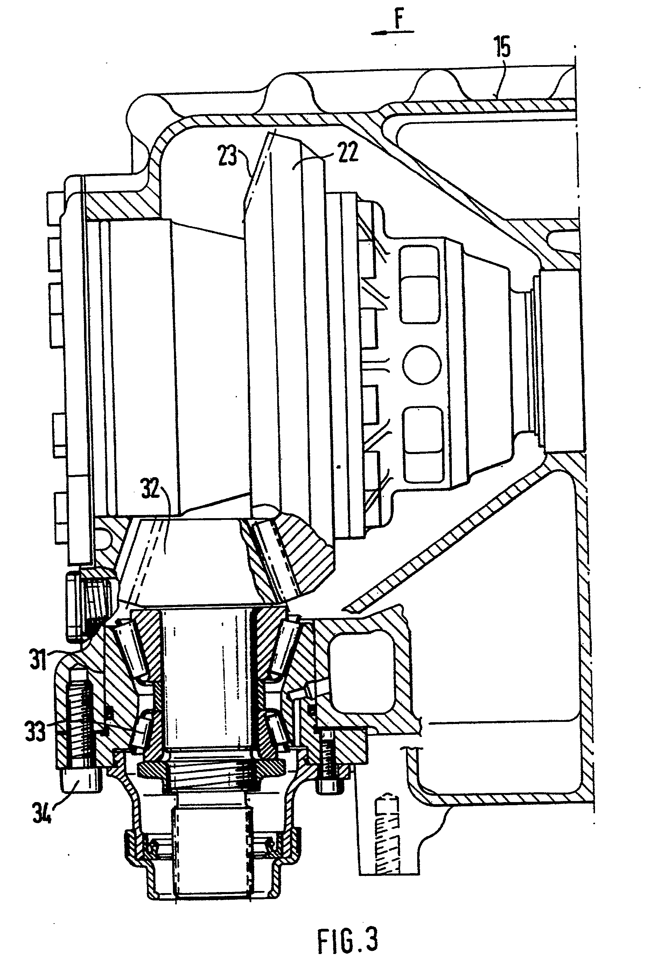

Wie aus Fig. 3 näher zu erkennen ist, weist das Gehäuse 15 eine Öffnung 31 auf, in der der Ritzelkopf 32 in einem Lager 33 gehalten wird. Diese Öffnung 31 ist so groß bemessen, daß nach einem Lösen der Schraube 34 der Ritzelkopf durch die Öffnung 31 montierbar ist.

## Patentansprüche

1. Vorderachsgetriebe für Allradfahrzeuge, insbesondere mit längseingebautem Antriebsaggregat und einem Verteilergetriebe, das über eine Antriebswelle mit einem Winkeltrieb verbunden ist, der ein Differentialgetriebe mit Radantriebswellen sowie ein mit einem Ritzel der Antriebswelle verbundenes Tellerrad in einem den Winkeltrieb umschließenden Gehäuse umfaßt, gekennzeichnet, durch folgende Merkmale:
a) das Gehäuse (15) umfaßt einen stirnseitigen Lagerdeckel (16), der hülsenförmig ausgeführt ist und mit seinem einen freien Ende (17) in den Getrieberaum (18) ragt und mit seinem weiteren abgekehrten Ende (19) am Gehäuse (15) befestigt ist;
b) an dem freien Ende (17) ist ein Abstützlager (21) und an dem abgekehrten Ende (19) ist ein Radantriebsgelenk (24) angeordnet;
c) das Abstützlager (21) ist etwa in einer gleichen Ebene (X-X) mit der Verzahnung (23) des Tellerrades (22) angeordnet;
d) die Verzahnung (23) ist abgekehrt zur Längsmittelachse (L) des Fahrzeugs unmittelbar benachbart des Radantriebsgelenks (24) angeordnet.

2. Vorderachsgetriebe nach Anspruch 1, dadurch gekennzeichnet, daß die Antriebswelle (5) mit einem Abstand (b) zur Längsmittelachse (L) des Fahrzeugs bzw. zur Kurbelwelle des Motors (1) angeordnet und dicht am Schwungrad (2) vorbeigeführt ist und das Gelenk (24) etwa eine Lage in einer senkrechten Längsebene (Y-Y) der Antriebswelle (5) einnimmt.

3. Vorderachsgetriebe nach den Ansprüchen 1 oder 2, dadurch gekennzeichnet, daß das Gehäuse (15) Teil einer Getriebe- und Motorölwanne (35) ist und ein das Getriebe (6) (Differentialgetriebe und Winkeltrieb) aufnehmendes erstes Gehäuseteil (15a) und ein anschließendes, die Antriebswelle (5) lagerndes rohrförmiges zweites Gehäuseteil (15b) umfaßt und die beiden Gehäuseteile (15a und 15b) einen Getriebeölraum (25) bilden, der von einem Motorölraum (26) getrennt ist.

4. Vorderachsgetriebe nach Anspruch 3, dadurch gekennzeichnet, daß das rohrförmige Gehäuseteil (15b) einen Öldurchtritt im Getriebelager (29) zum Wellenlager (28) aufweist.

5. Vorderachsgetriebe nach einem oder mehreren der vorhergehenden Ansprüche, dadurch gekennzeichnet, daß das Gehäuse (15) eine Öffnung (31) für die Lagerung eines Ritzelkopfs (32) des Winkeltriebs (7) aufweist, die einen entsprechend dem Durchmesser des Kopfes (32) ausgeführte Größe besitzt.

## Revendications

1. Transmission pour essieu avant de véhicules toutes roues motrices, en particulier avec moteur longitudinal et boîte de vitesses intermédiaire, reliée par un arbre moteur à un renvoi d'angle qui comprend un différentiel avec arbres d'entraînement des roues ainsi qu'une couronne de différentiel reliée par un pignon à l'arbre de transmission, dans un carter enfermant le renvoi d'angle, caractérisée par les caractéristiques suivantes:
a) le carter (15) comprend un couvercle de palier (16) frontal qui est en forme de manchon et qui par l'une de ses extrémités libres (17) pénètre dans l'espace de transmission (18) et par son autre extrémité (19) éloignée est fixé sur le carter (15);
b) un palier d'appui (21) est placé à l'extrémité libre (17) et une articulation d'entraînement de roue (24) est placée à l'extrémité (19) opposée;
c) le palier d'appui (21) est placé à peu près dans un même plan (X-X) que la denture (23) de la couronne de différentiel (22);
d) la denture (23) est disposée à l'opposé de l'axe médian longitudinal (L) du véhicule, à proximité immédiate de l'articulation d'entraînement de roue (24).

2. Transmission pour essieu avant selon la revendication 1, caractérisée en ce que l'arbre de transmission (5) se trouve à une distance (b) de l'axe médian longitudinal (L) du véhicule ou du vilebrequin du moteur (1), et passe tout contre le volant (2), et en ce que l'articulation (24) prend une position dans un plan longitudinal vertical (Y-Y) de l'arbre de transmission (5).

3. Transmission pour essieu avant selon la revendication 1 ou 2, caractérisée en ce que le carter (15) fait partie d'un carter d'huile pour engrenages et d'huile moteur (35) et comprend une première partie de carter (15a) logeant la transmission (6) (différentiel et renvoi d'angle) ainsi qu'une deuxième partie de carter (15b) tubulaire, faisant suite à la première, supportant l'arbre de transmission (5), et en ce que les deux parties de carter (15a) et (15b) forment un compartiment d'huile pour engrenages (25) qui est séparé d'un compartiment d'huile moteur (26).

4. Transmission pour essieu avant selon la revendication 3, caractérisée en ce que la partie de carter (15b) tubulaire présente un passage pour l'huile dans le palier de transmission (29), menant au palier d'arbre (28).

5. Transmission pour essieu avant selon une ou plusieurs des revendications ci-dessus, caractérisée en ce que le carter (15) présente une ouverture (31) pour le support d'une tête de pignon (32) du renvoi d'angle (7) dont les dimensions correspondent au diamètre de la tête (32).

**Claims**

1. A front-axle transmission for all-wheel-drive vehicles, in particular with a longitudinally fitted drive unit and a transfer box which is connected by way of a driving shaft to an angle drive which comprises a differential gear with wheel driving shafts and a crown gear connected to a pinion of the driving shaft in a housing containing the angle drive, characterized by the following features:
   a) the housing (15) includes a bearing cover (16) at the front end, the said bearing cover (16) being constructed in the form of a sleeve and projecting with one free end (17) into the transmission space (18) and being secured to the housing (15) by its other remote end (19);
   b) a support bearing (21) is mounted at the free end (17) and a wheel universal joint (24) is mounted at the remote end (19);
   c) the support bearing (21) is arranged in approximately the same plane (X-X) as the toothing (23) of the crown gear (22);
   d) the toothing (23) is arranged directly adjacent the wheel universal joint (24) and remote from the longitudinal median axis (L) of the vehicle.

2. A front-axle transmission according to Claim 1, characterized in that the driving shaft (5) is situated at a distance (b) from the longitudinal median axis (L) of the vehicle or the crankshaft of the engine (1) and is guided closely past the flywheel (2), and the joint (24) occupies a position approximately in a vertical longitudinal plane (Y-Y) of the driving shaft (5).

3. A front-axle transmission according to Claim 1 or 2, characterized in that the housing (15) is part of a transmission and engine oil sump (35) and comprises a first housing part (15a) receiving the transmission (6) (differential gear and angle drive) and an attached, tubular second housing part (15b) supporting the driving shaft (5), and the two housing parts (15a and 15b) form a transmission oil space (25) which is separate from an engine oil space (26).

4. A front-axle transmission according to Claim 3, characterized in that the tubular housing part (15b) comprises an oil duct in the transmission bearing (29) to the shaft bearing (28).

5. A front-axle transmission according to one or more of the preceding Claims, characterized in that the housing (15) has an opening (31) for the mounting of a pinion head (32) of the angle drive (7), the opening (31) having a size corresponding to the diameter of the head (32).

FIG.1

FIG.2

FIG.3